# EUROPEAN PATENT SPECIFICATION

(11) **EP 2 865 465 B1**
(45) Date of publication and mention of the grant of the patent: **17.01.2018**
(21) Application number: 14185229.3
(22) Date of filing: 17.09.2014
(51) Int. Cl.: B22F 3/105, B29C 67/00

(54) **Method for manufacturing a metallic component by additive laser manufacturing**
Verfahren zur Herstellung einer metallischen Komponente mittels Zusatzlaserfertigung
Procédé de fabrication d'un composant métallique par fabrication laser d'un additif

(30) Priority: 27.09.2013 EP 13186289
(43) Date of publication of application: 29.04.2015
(73) Proprietor: Ansaldo Energia IP UK Limited, London W1G 9DQ (GB)
(72) Inventor: Etter, Thomas, 5037 Muhen (CH); Hoebel, Matthias, 5210 Windisch (CH); Schurb, Julius, 8004 Zuerich (CH); Roerig, Felix, 5400 Baden (CH)
(74) Representative: Bernotti, Andrea

(56) References cited:
- EP-A1- 2 586 548
- WO-A1-2012/102655
- WO-A1-2013/087515
- DE-A1-102005 050 665
- US-A- 5 393 482
- T. NIENDORF ET AL.: "Highly Anisotropic Steel Processed by Selective Laser Melting", METALLURGICAL AND MATERIALS TRANSACTION, vol. 44B, August 2013 (2013-08), pages 794-796, XP002721041,
- Debasish Dutta ET AL: "Layered Manufacturing: Current Status and Future Trends", , 1 January 2001 (2001-01-01), XP055041474, DOI: 10.1115/1.1355029# Retrieved from the Internet: URL:http://www.cs.cmu.edu/~lew/PUBLICATION PDFs/RP/JCISE 2001.pdf [retrieved on 2012-10-18]

## Description

### BACKGROUND OF THE INVENTION

The present invention relates to the technology of high-temperature resistant components, especially hot gas path components for gas turbines. It refers to a method for manufacturing a metallic component / three-dimensional article by additive manufacturing technologies, such as selective laser melting (SLM) or selective laser sintering (SLS).

### PRIOR ART

Additive manufacturing has become a more and more attractive solution for the manufacturing of metallic functional prototypes and components. It is known that SLM, SLS and EBM methods use powder material as base material. The component or article is generated directly from a powder bed. Other additive manufacturing methods, such laser metal forming (LMF), laser engineered net shape (LENS) or direct metal deposition (DMD) locally fuse material onto an existing part. This newly generated material may be deposited either as wire or as powder, where the powder deposition device is moved along predefined path with either a robot or a CNC machine.

One characteristic feature of powder-based or other additive manufacturing technology can be the strong anisotropy of material properties (for example Young's modulus, yield strength, tensile strength, low cycle fatigue behaviour LCF, creep) resulting from the known layer-wise build-up process and the local solidification conditions during the SLM powder bed processing.

The anisotropic mechanical properties of SLM generated material provide better properties, first of all fatigue life time, in the primary growth direction. But such anisotropy of material properties could be a disadvantage in several applications. Therefore, the applicant has filed two so far unpublished patent applications, which disclose that the anisotropic material behaviour of components manufactured by additive laser manufacturing techniques can be reduced by an appropriate "post-built" heat treatment, resulting in more isotropic material properties.

It would be beneficial to locally control the microstructure of the generated material/component such that the mechanical properties, for example LCF; HCF (high cycle fatigue), creep, correlate with the thermo-mechanical load conditions at different locations of the component.

Additional so far unpublished patent applications filed by the applicant of the present application disclose that the primary and secondary grain orientation of material generated by the SLM technique can be adjusted by specific scanning strategies, e.g. movement directions of the laser beam. This control of the microstructure is highly beneficial for parts and prototypes, which are manufactured with the SLM technique. The SLM technique is able to manufacture high performance and complex shaped parts due to its capability to generate very sophisticated designs directly from a powder bed. By properly adjusting the primary and secondary grain orientations, the Young's modulus can be controlled and aligned to the thermo-mechanical load conditions of the component. However, different scanning strategies primarily influence the grain orientation, but not the grain sizes.

Documents DE10 2011 105 045 B3 and DE 10 2007 061 549 A1 disclose methods where the parts manufactured by SLM are built with different laser powers/beam diameters. With this "core-shell" principle, the outer surface of the component (shell) is melted with a different laser beam diameter (lower diameter of the laser beam and lower laser power) than the bulk area of the component (core). The method according to DE 10 2011 105 045 B3 is characterized in that the paths, on which the laser beam for melting the powdery component material is conducted over the core region is selected in such a manner that they always reach at least approximately perpendicular the shell region during contact with the shell region. By this method, higher build-up rates of the bulk (core) and good surface finish on the outer surface (shell) with a good metallurgical bonding can be realised. So far, however, the consequences of the different solidification processes in the core and shell areas have not been systematically investigated and exploited.

Document by T. Niendorf et al, "Highly Anisotropic Steel Processed by Selective Laser Melting", Metallurgical and Materials Transaction, Volume 44B, August 2013, p.794-796, describes several test results for SLM processed austenitic 316L stainless steel. The nominal composition of the 316 L steel is the following: ≤0.03 % C; ≤1 % Si; ≤2 % Mn; 16.5 to 18.5 % Cr; 10 to 14 % Ni; 2 to 2.5 %Mo, remainder Fe. Cubic samples with a shell core structure made of that steel material were manufactured - the outer structure was built employing a 400 W laser system leading to a weakly textured fine grained solidification structure. The inner structure was built employing a 1000 W laser system leading to a complete different microstructure with elongated grains with a size of more than 1 mm parallel to the build direction. This is a high degree of anisotropy.

Document EP 2586548 A1 discloses an additive manufacturing method, preferably SLM, for manufacturing a component with a special grain size distribution, so that the lifetime of the component is improved with respect to a similar component with a substantially uniform grain size. The desired grain size distribution is directly generated during the additive manufacturing process, whereby the grain size is controlled by controlling the cooling rate of the melt pool within the SLM process, which is realized by controlling the local thermal gradients at the melting zone. The melting zone is created by the (first) laser beam. In a preferred embodiment the local thermal gradients at that melting zone are controlled by a second laser beam or another radiation source. That means that a second laser is used to heat the surrounding material to control locally the thermal gradients and thus the melt pool cooling rate, which gives control of the grain size. This treatment is comparable with a local heat treatment.

### SUMMARY OF THE INVENTION

It is an object of the present invention to disclose an improved method for entirely or partly manufacturing a metallic component / a three-dimensional article made of Ni-, Co-, Fe- based superalloys or combinations thereof by additive manufacturing methods with locally optimised mechanical properties.

This and other objects are obtained by a method according to claim 1.

The method for manufacturing a three-dimensional metallic article / component made of a Ni-, Co-, Fe- based superalloy or combinations thereof, entirely or partly, comprising a microstructure with adjusted grain sizes to the load conditions of said article / component, by an additive manufacturing process selected from the group of selective laser melting (SLM)or selective laser sintering (SLS), using a metallic base material in powder form, wherein said adjusted grain sizes are directly generated during said additive manufacturing process, comprises the following steps:
a) generating a three-dimensional model of said article followed by a slicing process to calculate the cross sections;
b) passing said calculated cross sections to a machine control unit afterwards;
c) providing a powder of said base material, which is needed for the process;
d) preparing a powder layer with a regular and uniform thickness on a substrate plate or on a previously processed powder layer or on a conventionally manufactured preform;
e) performing powder melting by scanning with an energy beam in an area corresponding to a cross section of said article according to the three-dimensional model stored in the control unit;
f) lowering the upper surface of the previously formed cross section by one layer thickness;
g) repeating said steps from c) to f) until reaching the last cross section according to the three-dimensional model and
h) optionally heat treating said three-dimensional article,
wherein in step e) a dual laser setup is used, where two laser beams of different beam properties are combined in the same machine and by adjusted beam profiling and integration of a suitable beam switch in a controlled manner a switching between two different laser beam diameters is performed. It is characterized in that in each layer the laser beam with the smaller diameter scans the whole area firstly thereby creating fine grain sizes and in every kth layer, with k>1, the laser beam with the larger diameter scans only the area where a coarse grain size is needed thereby remelting the area with fine grain sizes.

It is an advantage of the present invention that with such a method higher lifetime and operation performances of metallic parts and prototypes can be reached.

The grain size can be controlled by the laser beam shaping and the adjustment of laser intensities and scanning/build-up control.

With this tailored SLM build-up method, components made of Ni-, Co-, or Fe based superalloys can be produced, which have locally optimised mechanical properties. For this purpose, the grain size is adapted to the load conditions of the component, resulting in extended service lifetime. Larger grains as they are generated e.g. by a large diameter laser beam of higher power, usually at lower scan velocities, are benefitial for creep loaded zones. Smaller grains, however, as produced by a laser beam of smaller diameter at lower power and with faster scan velocity are beneficial for LCF and for HCF loaded areas.

A smaller melt pool size is produced preferably by lower energy beam power and/or smaller energy beam diameter and/or higher scan velocities in areas, resulting in finer grain sizes of the solidified material and a larger melt pool size is produced preferably by higher energy beam power and/or larger energy beam diameter and/or lower scan velocities in areas, resulting in larger grain sizes of the solidified material.

An important aspect of the present invention is the fact that the preferred microstructures do not have to be implemented in the whole volume of the part. Instead, the laser beam shaping and the corresponding process parameters determine the grain size and they can be adjusted in an arbitrary manner for different subvolumes, depending on the local mechanical integrity (MI) requirements.

In the present invention, a dual laser setup is used for this purpose, where two laser beams of different beam properties are combined in the same machine. With properly adjusted beam profiling and integration of a suitable beam switch, it is possible to switch in a controlled manner between two different laser beam diameters. As a consequence, melt pools of different diameter and depth are produced resulting in the formation of grains of different grain size. In each layer the laser beam with the smaller diameter scans the whole area and creates fine grain sizes ,and in every kth layer, with k>1, the laser beam with the larger diameter scans the area where a coarse grain size is needed thereby remelting the area with fine grain sizes. Such a remelting of areas with fine grained microstructures with a second laser beam comprising different beam properties, especially a big laser beam diameter (big laser spot) coarses the grain size in the mentioned areas. In addition to the described modification of the grain sizes the remelting of the material with the second laser has several advantages, for example reduction of residual stresses,demage of anisotropy in the microstrucure, enabling precipitations. This leads to a strong microstructure.

In preferred embodiments the layers have variable thicknesses and the number of the described layers is 2≤k≤6, preferably k=4.

The components/articles manufactured according to the disclosed method are with advantage a hot gas path part or a prototype with complex design used in a compressor, combustor or turbine section of a gas turbine.

### BRIEF DESCRIPTION OF THE DRAWINGS

The present invention is now to be explained more closely by means of different embodiments and with reference to the attached drawings.
- Fig. 1: shows the fine-grained microstructure in z-axis of Hastelloy X manufactured with a 400 W single laser and
- Fig. 2: shows the coarse-grained microstructure in z-axis of Hastelloy X manufactured with a 1000 W dual laser.

### DETAILED DESCRIPTION OF DIFFERENT EMBODIMENTS OF THE INVENTION

Investigations of the properties of SLM generated materials with the "core-shell" principle (e.g. two different laser beam configurations) have shown different mechanical properties (e.g. Young's modulus, yield strength) dependent on the laser beam shaping and thus the laser intensity. This is a consequence of the locally different solidification conditions during the SLM powder bed processing using different laser beam shaping. Due to the typical temperature profile in the melt pool and the resulting thermal gradients in its vicinity, a faster and preferred grain growth perpendicular to the powder plane is favoured. This results in a characteristic microstructure showing elongated grains in the direction perpendicular to the powder plane (z-direction). It has turned out, that the mechanical properties within the xy-plane as well as along the z-direction of specimens produced with a smaller laser beam diameter (approx. 70-100 µm) are different to the properties produced with a laser of larger beam diameter (approx. 500-1000 µm).

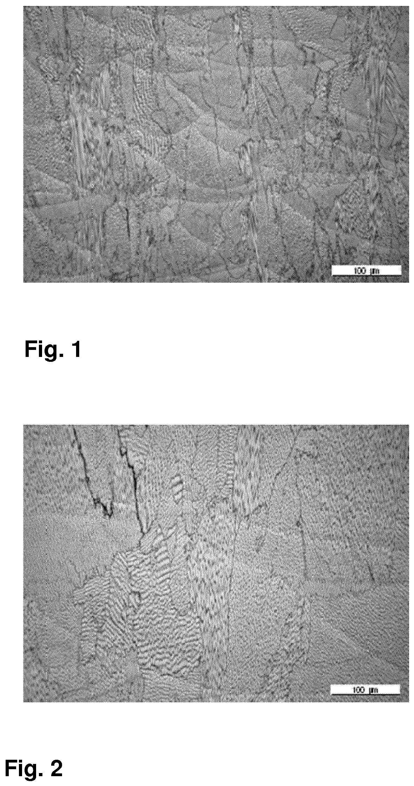

Fig. 1 and Fig. 2 show such an example for Hastelloy X in optical micrographs, where the samples have been manufactured with different laser beam sources. This has resulted in different laser profiles and different dimensions of the melt pool.

Hastalloy X is a Ni based superalloy with the following nominal composition (%): 0.1 C, 21 Cr, 1 Co, 9 Mo, 18 Fe, 1 W, remainder Ni.

The Young's modulus and the yield strength have been measured in the "as built" condition at 750 °C, in z-axis orientation. For the specimen according to Fig. 1 with a fine grained microstructure a yield strength of 406 MPa and a Young's modulus of 119 GPa were measured, while for specimen according to Fig. 2 (coarse grain structure) the yield strength and the Young's modulus were 361 MPa, resp. 94 GPa.

At room temperature (23°C) a yield strength of 591 MPa and a Young's modulus of 154 GPa were measured in the orientation of the z-axis and 674 MPa resp. 162 GPa in the orientation of the xy-plane (for specimen manufactured with a laser power of 400 W), while for specimen manufactured with a laser power of 1000 W the yield strength and the Young's modulus were 490 MPa, resp. 113 GPa in the z-axis and in the xy-plane the yield strength of 563 MPa and a Young's modulus of 144 GPa were measured.

With this tailored SLM build-up method, components can be produced, which have locally optimised mechanical properties. For this purpose, the grain size is adapted to the load conditions of the component, that means the grain size is favourably matched with the design intent of the component, resulting in extended service lifetime. Larger grains as they are generated e.g. by a large diameter laser beam of higher power, usually at lower scan velocities, are benefitial for creep loaded zones. Smaller grains, however, as produced by a laser beam of smaller diameter at lower power and with faster scan velocity are beneficial for LCF and for HCF loaded areas.

An important aspect of the present invention is the fact that the preferred microstructures do not have to be implemented in the whole volume of the part. Instead, the laser beam shaping and the corresponding process parameters determine the grain size and they can be adjusted in an arbitrary manner for different subvolumes, depending on the local mechanical integrity (MI) requirements. According to the invention a dual laser setup is used for this purpose, where two laser beams of different beam properties are combined in the same machine. With properly adjusted beam profiling and integration of a suitable beam switch, it is possible to switch in a controlled manner between two different laser beam diameters. As a consequence, melt pools of different diameter and depth are produced resulting in the formation of grains of different size. It is essential for the present invention that the material is melted with two different lasers (different laser beam properties) in certain areas - the second laser beam remelts the solidified material/areas which was melted by the first laser before. In addition to the described advantages of grain size modifications the remelting of the material with the second laser has several advantages, for example reduction of residual stresses,demage of anisotropy in the microstrucure, enabling precipitations etc.

With this selective remelting at different laser beam configurations, subvolumes of the part can be generated, where larger grains dominate and where better creep properties are obtained. In the same way, a fine grain structure can be generated in other areas, where creep resistance is less important but good LCF or HCF properties are required.

This enabling possibility of locally controlling the microstructure can be even used to adapting the mechanical properties locally to the cyclic temperature load of the part.

The manufacturing of a three-dimensional metallic article / component made of a Ni-, Co-, Fe- based superalloy or combinations thereof, entirely or partly, wherein said article / component has a microstructure with adjusted grain sizes to the load conditions of said article / component, by an additive manufacturing process (SLM, SLS), using a metallic base material in powder form, wherein said adjusted grain sizes are directly generated during said additive manufacturing process, comprises the following steps:
- generating a three-dimensional model of said article followed by a slicing process to calculate the cross sections;
- passing said calculated cross sections to a machine control unit afterwards;
- providing a powder of said base material, which is needed for the process;
- preparing a powder layer with a regular and uniform thickness on a substrate plate or on a previously processed powder layer or on a conventionally manufactured preform;
- performing powder melting by scanning with an energy beam in an area corresponding to a cross section of said article according to the three-dimensional model stored in the control unit;
- lowering the upper surface of the previously formed cross section by one layer thickness;
- repeating said steps from c) to f) until reaching the last cross section according to the three-dimensional model and
- optionally heat treating said three-dimensional article,
wherein in the step of performing powder melting a dual laser setup is used, where two laser beams of different beam properties are combined in the same machine and by adjusted beam profiling and integration of a suitable beam switch in a controlled manner a switching between two different laser beam diameters is performed. It is characterizied that in each layer the laser beam with the smaller diameter scans the whole area firstly thereby creating fine grain sizes and in every kth layer, with k>1, the laser beam with the larger diameter scans only the area where a coarse grain size is needed thereby remelting the area with fine grain sizes.

Optionally, the the energy beam of larger diameter and higher power remelts multiple powder layers in one single pass. The number of these remolten layers could correspond to previously scanned layers with the small diameter beam, where locally a fine grain structure had been produced. This use of the larger beam diameter is only applied to the subvolumes, where larger grains (e.g. for improved creep properties) are requested. Furthermore, heat treating said three-dimensional articles could be applied to relieve residual stress due to different driving forces for recrystallisation /grain coarsening and to enhance the difference between the areas that have been produced with small and large beam diameters.

The component/article manufactured by the present method are preferable hot gas path parts or prototypes with complex design used in compressor, combustor or turbine section of a gas turbine.

## Claims

1. Method for manufacturing a three-dimensional metallic article / component made of a Ni-, Co-, Fe- based superalloy or combinations thereof, entirely or partly, comprising a microstructure with adjusted grain sizes to the load conditions of said article / component, by an additive manufacturing process selected from the group of selective laser melting (SLM) or selective laser sintering (SLS), using a metallic base material in powder form, wherein said adjusted grain sizes are directly generated during said additive manufacturing process, said method comprises the steps of:
a) generating a three-dimensional model of said article followed by a slicing process to calculate the cross sections;
b) passing said calculated cross sections to a machine control unit afterwards;
c) providing a powder of said base material, which is needed for the process;
d) preparing a powder layer with a regular and uniform thickness on a substrate plate or on a previously processed powder layer or on a conventionally manufactured preform;
e) performing powder melting by scanning with an energy beam in an area corresponding to a cross section of said article according to the three-dimensional model stored in the control unit;
f) lowering the upper surface of the previously formed cross section by one layer thickness;
g) repeating said steps from c) to f) until reaching the last cross section according to the three-dimensional model and
h) optionally heat treating said three-dimensional article,
wherein in step e) a dual laser setup is used, where two laser beams of different beam properties are combined in the same machine and by adjusted beam profiling and integration of a suitable beam switch in a controlled manner a switching between two different laser beam diameters is performed, **characterized in that** in each layer the laser beam with the smaller diameter scans the whole area thereby creating fine grain sizes and in every kth layer, with k>1, the laser beam with the larger diameter scans only the area where a coarse grain size is needed thereby remelting the area with fine grain sizes.

2. Method according to claim 1, **characterized in that** 2≤k≤6, preferably k=4.

3. Method according to one of the preceding claims, **characterized in that** the layers have variable thicknesses.

4. Component/article manufactured by a method according to one of the preceding claims, **characterized in that** the component/article is a hot gas path part or a prototype with complex design used in a compressor, combustor or turbine section of a gas turbine.

## Patentansprüche

1. Verfahren zur Herstellung eines dreidimensionalen Metallgegenstandes/-bauteils, vollständig oder teilweise bestehend aus Ni-, Co-, Fe-basierten Superlegierungen oder Kombinationen davon, umfassend eine Mikrostruktur mit an die Lastbedingungen des Gegenstandes / Bauteils angepassten Korngrößen, mittels additiver Herstellungsverfahren, ausgewählt aus der Gruppe bestehend aus selektivem Laserschmelzen (SLM) oder selektivem Lasersintern (SLS), mithilfe eines metallbasierten Materials in Pulverform, wobei die angepassten Korngrößen während des additiven Herstellungsverfahrens direkt erzeugt werden, wobei das Verfahren folgende Schritte umfasst:
a) Herstellen eines dreidimensionalen Modells des Gegenstandes, gefolgt von einem Schneidvorgang zur Berechnung der Querschnitte;
b) anschließende Eingabe der berechneten Querschnitte in eine Maschinensteuereinheit;
c) Bereitstellen eines Pulvers des Ausgangsmaterials, das für das Verfahren benötigt wird;
d) Herstellen einer Pulverschicht mit einer regelmäßigen, einheitlichen Dicke auf einer Substratplatte, auf einer vorher verarbeiteten Pulverschicht oder auf einer auf herkömmliche Weise hergestellten Vorform;
e) Pulverschmelzen mittels Scannen mit einem Energiestrahl in einem Bereich, der einem Querschnitt des Gegenstandes entsprechend dem in der Steuereinheit gespeicherten dreidimensionalen Modell entspricht;
f) Reduzieren der Oberfläche des vorher geformten Querschnitts um eine Schichtdicke;
g) Wiederholen der Schritte c) bis f), bis der letzte Querschnitt entsprechend dem dreidimensionalen Modell erreicht ist und
h) optionale Wärmebehandlung des dreidimensionalen Gegenstandes,
wobei in Schritt e) eine duale Lasereinstellung angewandt wird, bei der in derselben Maschine zwei Laserstrahlen mit unterschiedlichen Eigenschaften kombiniert werden, indem durch die Anpassung der Laserstrahlprofile und die Anwendung einer geeigneten, gesteuerten Laserstrahlumschaltung eine Umschaltung zwischen zwei unterschiedlichen Laserstrahldurchmessern durchgeführt wird,
**dadurch gekennzeichnet, dass** der Laserstrahl mit dem kleinsten Durchmesser in jeder Schicht den gesamten Bereich abtastet, wodurch feine Korngrößen erzeugt werden, und in jeder k-ten Schicht, wobei k>l ist, tastet der Laserstrahl mit dem größten Durchmesser nur den Bereich ab, in dem eine grobe Korngröße erforderlich ist, wodurch der Bereich mit feinen Korngrößen erneut geschmolzen wird.

2. Verfahren nach Anspruch 1, **dadurch gekennzeichnet, dass** 2≤k≤6, vorzugsweise k=4, ist.

3. Verfahren nach einem der vorstehenden Ansprüche, **dadurch gekennzeichnet, dass** die Schichten unterschiedliche Dicken aufweisen.

4. Bauteil/Gegenstand, der in einem Verfahren nach einem der vorstehenden Ansprüche gefertigt wird, **dadurch gekennzeichnet, dass** das Bauteil/der Gegenstand ein Teil eine Heißgaspfades oder ein Prototyp mit einer komplexen Bauweise ist, der in einem Verdichter, einer Brennkammer oder einem Turbinenabschnitt einer Gasturbine verwendet wird.

## Revendications

1. Procédé de fabrication d'un composant/article métallique en trois dimensions se composant d'un superalliage à base de Ni, Co, Fe ou de combinaisons de ceux-ci, totalement ou partiellement, comprenant une microstructure ayant des tailles de particules ajustées aux conditions de chargement dudit article/composant, par un procédé de fabrication additif choisi dans le groupe de la fusion laser sélective (SLM) ou du frittage laser sélectif (SLS), en utilisant un matériau de base métallique sous la forme d'une poudre, lesdites tailles de particules ajustées étant directement générées pendant ledit procédé de fabrication additif, ledit procédé comprenant les étapes consistant à :
a) générer un modèle en trois dimensions dudit article suivi par un procédé de découpage en tranches pour calculer les sections transversales ;
b) faire ensuite passer lesdites sections transversales calculées dans une unité de commande d'une machine ;
c) utiliser une poudre dudit matériau de base, qui est nécessaire pour le procédé ;
d) préparer une couche de poudre ayant une épaisseur régulière et uniforme sur une plaque de substrat ou sur une couche de poudre précédemment traitée ou sur une préforme fabriquée de manière conventionnelle ;
e) réaliser la fusion de la poudre par balayage avec un faisceau d'énergie dans une zone correspondant à la section transversale dudit article selon le modèle en trois dimensions correspondant stocké dans l'unité de commande ;
f) réduire la surface supérieure de la section transversale précédemment formée par une épaisseur de couche ;
g) répéter lesdites étapes c) à f) jusqu'à l'obtention de la dernière section transversale selon le modèle en trois dimensions, et
h) facultativement traiter thermiquement ledit article en trois dimensions,
dans lequel dans l'étape e) une configuration à double laser est utilisée, où deux faisceaux lasers ayant différentes propriétés de faisceau sont combinés dans la même machine et par un profilage du faisceau ajusté et l'intégration d'un commutateur de faisceau approprié, une commutation entre deux diamètres différents de faisceau laser est réalisée de manière contrôlée, **caractérisé en ce que** dans chaque couche, le faisceau laser ayant le diamètre le plus petit balaye toute la zone, créant ainsi des tailles de particules fines, et dans chaque kième couche, avec k > 1, le faisceau laser ayant le diamètre le plus grand balaye uniquement la zone où une taille de particule grossière est nécessaire, en faisant ainsi refondre la zone avec des tailles de particules fines.

2. Procédé selon la revendication 1, **caractérisé en ce que** 2 ≤ k ≤ 6, de préférence k = 4.

3. Procédé selon l'une quelconque des revendications précédentes, **caractérisé en ce que** les couches ont des épaisseurs variables.

4. Composant/article fabriqué par un procédé selon l'une quelconque des revendications précédentes, **caractérisé en ce que** le composant/l'article est une partie de passage de gaz chaud ou un prototype ayant une conception complexe utilisé dans une section de compresseur, chambre de combustion ou turbine d'une turbine à gaz.
